# EUROPÄISCHE PATENTSCHRIFT

(11) **EP 0 697 483 B1**
(45) Veröffentlichungstag und Bekanntmachung des Hinweises auf die Patenterteilung: **01.10.1997**
(21) Anmeldenummer: 95110883.6
(22) Anmeldetag: 12.07.1995
(51) Int. Cl.: D21G 1/02, F16C 13/00

(54) **Durchbiegungssteuerbare Walze für einen Kalander o. dgl.**
Controlled deflection roll for a calender or similar
Rouleau à réglage de la flexion pour une calandre ou similaire

(30) Priorität: 19.08.1994 DE 4429499
(43) Veröffentlichungstag der Anmeldung: 21.02.1996
(73) Patentinhaber: Voith Sulzer Finishing GmbH, 47803 Krefeld (DE)
(72) Erfinder: van Haag, Rolf, Dr., D-47647 Kerken (DE)
(74) Vertreter: Knoblauch, Ulrich, Dr.-Ing.

(56) Entgegenhaltungen:
- EP-A- 0 384 173

## Beschreibung

Die Erfindung bezieht sich auf eine durchbiegungssteuerbare Walze für einen Kalander o.dgl., bei der ein Walzenmantel mit Hilfe von hydrostatischen Stützelementen an einem den Walzenmantel durchsetzenden, drehfest gelagerten Träger abgestützt ist und die Stützelemente in ihrer der Mantelinnenfläche zugewandten Stützfläche mindestens eine Tasche aufweisen und mit einer dem Träger zugewandten Druckfläche einen Druckraum begrenzen, der einerseits mit einer Druckmittelzuleitung und andererseits über eine Drossel mit der Tasche in Verbindung steht.

Eine solche Walze ist aus DE 30 22 491 C2 bekannt. Sie ist nicht nur für Kalander, sondern auch für Glättwerke, Pressen, Partien von Papier-, Zellstoff- und Druckmaschinen oder Walzwerke für Stahl, Kunststoff u.dgl. geeignet.

Im bekannten Fall besitzen die Stützelemente eine geschlossene Stützfläche mit zwei Taschen. Diesen liegt je ein zylindrischer Druckraum gegenüber, der mit der zugehörigen Tasche über eine Drosselbohrung verbunden ist und mittels eines Steuergeräts mit einem regelbaren Druck gespeist werden kann. Beide Druckräume können mit dem gleichen Druck oder mit unterschiedlichem Druck versorgt werden. Die vom Stützelement aufbringbare Stützkraft ist durch die Abmessungen des Stützelements und den Regelbereich des Drucks begrenzt.

Aus US 3 587 152 A ist eine durchbiegungssteuerbare Walze bekannt, bei der Ringelemente als Ringdichtung dienen, wobei ihre dem Träger zugewandte ringförmige Druckfläche vom Druck des zulaufenden Druckmittels beaufschlagt wird. Hierdurch wird die Stirnfläche des Ringelements gegen die Innenfläche des Walzenmantels gedrückt. Der vom Ringelement umschlossene Innenraum ist über eine Drossel mit der Druckmittelzuleitung verbunden. Der im Innenraum herrschende Druck wirkt auf den Walzenmantel. Auch hier ist die auf den Walzenmantel aufbringbare Kraft durch die Abmessungen des Ringelements und den Regelbereich des Drucks begrenzt.

Aus DE 38 20 974 C2 ist eine durchbiegungssteuerbare Walze mit kolbenförmigen Dichtungsgliedern bekannt, bei der eine stirnseitige, dem Walzenmantel zugewandte Tasche ungedrosselt mit einem mit der Druckzuleitung verbundenen Druckraum in Verbindung steht und von einem Rand umgeben ist, in welchem sich Randkammern befinden. Diese haben in Umfangsrichtung einen Abstand voneinander und sind über eine Drossel mit einer zweiten Druckzuleitung verbunden. Außerdem besteht die Möglichkeit, den Ringraum zwischen Walzenmantel und Träger insgesamt mit einem Druckmittel vorbestimmten Drucks zu füllen. Ist der Druck in der Tasche höher als der Druck im Zwischenraum, ergibt sich ein "Überdruckelement", ist er kleiner, ein "Unterdruckelement".

Der Erfindung liegt die Aufgabe zugrunde, eine durchbiegungssteuerbare Walze der eingangs beschriebenen Art anzugeben, die den Bedürfnissen der Praxis noch besser gerecht wird.

Diese Aufgabe wird erfindungsgemäß dadurch gelöst, daß die Stützelemente als Ringelemente mit ringförmiger Tasche und ringförmiger Druckfläche ausgebildet sind und daß der vom Ringelement umschlossene Innenraum mit einer ein einstellbares Drosselorgan aufweisenden Ablaufleitung in Verbindung steht.

Bei dieser Konstruktion sind die Ringelemente Stützelemente, die jeweils eine Kraft auf den Walzenmantel ausüben, die sich aus dem Produkt der Größe der ringförmigen Druckfläche und dem dort wirkenden Druck des Druckmittels ergibt. Die ringförmige Tasche bewirkt eine hydrostatische, also reibungsarme Abstützung des Walzenmantels. Gleichzeitig bildet die ringförmige Tasche eine Sperre zwischen dem vom Ringelement umschlossenen Innenraum und dem zwischen Walzenmantel und Träger verbleibenden Ringraum. Der Druck im Innenraum kann daher unabhängig vom Druck im Ringraum gehalten werden.

Das Drosselorgan in der Ablaufleitung hat zumindest zwei Stellungen, nämlich geschlossen und voll geöffnet, kann aber vorzugsweise auch beliebige Zwischenstellungen einnehmen. Ist das Drosselorgan geöffnet, fließt das aus der ringförmigen Tasche in den Innenraum gelangende Druckmittel unverzüglich ab. Die Stützkraft wird allein im Bereich der Stützfläche des Ringelements aufgebracht. Ist das Drosselorgan dagegen geschlossen, baut sich im Innenraum derselbe Druck auf wie in der ringförmigen Tasche. Ohne große konstruktive Änderung wird daher die druckwirksame Fläche ganz erheblich erhöht und damit auch die Stützkraft. Durch entsprechende Einstellung des Drosselorgans kann jeder beliebige Zwischendruck im Innenraum aufrechterhalten werden. Man hat daher einen breiten Einstellbereich der Stützkraft und benötigt hierfür lediglich eine Druckmittelzuleitung und eine Ablaufleitung.

In weiterer Ausgestaltung ist dafür gesorgt, daß der zwischen Walzenmantel und Träger verbleibende Ringraum mit einer ein zweites einstellbares Drosselorgan aufweisenden Ablaufleitung in Verbindung steht. Auch hier kann das Drosselorgan mindestens eine geöffnete und eine geschlossene Stellung, vorzugsweise aber auch beliebige Zwischenstellungen, einnehmen. Ist das zweite Drosselorgan voll geöffnet, bildet sich im Zwischenraum kein erhöhter Druck aus. Ist das zweite Drosselorgan dagegen geschlossen, baut sich im Zwischenraum ein Druck auf, der gleich dem höchsten Taschendruck ist. Auch hier lassen sich beliebige Zwischendrücke einstellen. Besonders wichtig ist es wiederum, daß wegen der ringförmigen Tasche kein Flüssigkeitsaustausch zwischen dem Innenraum und dem Ringraum erfolgt. Besonders interessant ist hierbei die Kombination eines geschlossenen zweiten Drosselorgans, das zu einem erhöhten Druck im Innenraum und damit zu einem "Aufpumpen" des Walzenmantels führt, und einem geöffneten ersten Drosselorgan, das zu einer Druckabsenkung im Ringelement-Innenraum führt. Hierdurch wird nämlich der Walzenmantel an der dem Ringelement diagonal gegenüberliegenden Seite radial nach außen belastet.

Vorzugsweise sind die Stützelemente im Querschnitt kreisringförmig. Dies erleichtert die Herstellung der Stützelemente und der Druckräume sowie die Abdichtung der Stützelemente. Es kommen aber auch Querschnitte in Betracht, die von der Kreisringform abweichen und beispielsweise quadratisch oder rechteckig sind.

Empfehlenswert ist es, daß die ringförmige Tasche durch Querstege unterteilt und jeder Taschenabschnitt mit dem Druckraum über eine Drossel verbunden ist. Durch die Unterteilung der nach wie vor ihre Ringform beibehaltenden Tasche wird die Stabilität des Stützelements mit Bezug auf den Walzenmantel erhöht.

Des weiteren ist es günstig, daß die ringförmige Tasche und die ringförmige Druckfläche annähernd deckungsgleich radial hintereinander liegen. Die Druckfläche wird daher in Richtung auf die Taschenfläche belastet. Es erfolgt keine Kraftumlenkung.

Die besten Ergebnisse zeigen sich, wenn die Taschenfläche geringfügig größer ist als die Druckfläche.

In der praktischen Ausgestaltung ist es von Vorteil, wenn das einstellbare Drosselorgan ein Ventil ist. Derartige Ventile lassen sich durch eine Steuer- oder Regelvorrichtung leicht einstellen und damit den jeweiligen Arbeitsbedingungen gut anpassen.

Insbesondere ist das einstellbare Ventil ein Druckhalteventil. Mit ihm wird der Druck im davorliegenden Raum, also dem Ringelement-Innenraum oder dem Walzenmantel-Ringraum, auf einem gewünschten Wert gehalten.

Die Erfindung wird nachstehend anhand in der Zeichnung dargestellter, bevorzugter Ausführungsbeispiele näher erläutert. Es zeigen:
- Fig. 1: eine vergrößerte Darstellung eines erfindungsgemäß zu verwendenden Stützelements,
- Fig. 2: schematisch den Einbau von Stützelementen in einem Kalander,
- Fig. 3: einen Teillängsschnitt durch einen Stützbereich,
- Fig. 4: einen Teilquerschnitt durch einen Stützbereich,
- Fig. 5: eine Draufsicht auf das Stützelement und
- Fig. 6: in ähnlicher Darstellung eine abgewandelte Ausführungsform.

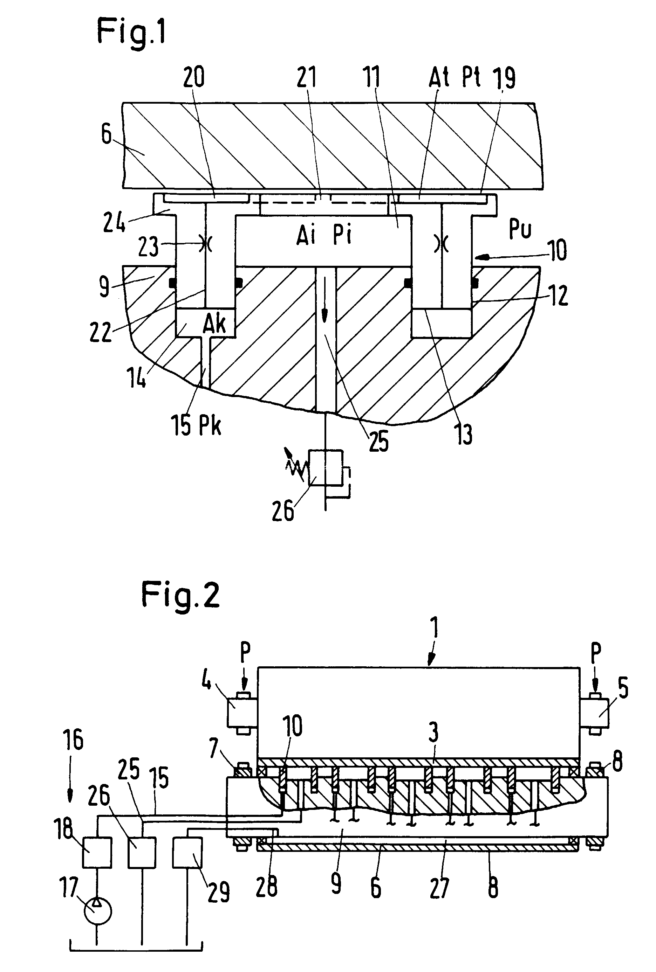

Bei dem Ausführungsbeispiel der Fig. 1 und 2 bilden eine obere Walze 1 und eine untere Walze 2 einen Preßspalt 3, in welchem beispielsweise eine Papierbahn behandelt wird. Die Enden der oberen Walze 1 sind in Lagern 4 und 5 gehalten, die durch eine äußere Kraft P belastet sind. Durch Anheben der Lager 4 und 5 kann der Walzenspalt 3 geöffnet werden. Ein Drehantrieb ist nicht eingezeichnet. Er greift vorzugsweise an der oberen Walze 1 an.

Die untere Walze 2 weist einen Walzenmantel 6 auf, der um einen drehfest in Lagern 7 und 8 gehaltenen Träger 9 drehbar ist. Hierbei wird er von Stützelementen 10 abgestützt, wie in Verbindung mit Fig. 1 noch näher erläutert wird. Das Stützelement 10 ist ein Ringelement, das einen Innenraum 11 umschließt. Das Ringelement ist in einer Ringnut 12 abgedichtet geführt, die einen durch eine Druckfläche 13 begrenzten Druckraum 14 bildet. Dieser ist über eine Zuleitung 15 mit einer Druckflüssigkeitsquelle 16, hier dargestellt durch eine Pumpe 17 und eine Druckregelventilanordnung 18, verbunden. Das Ringelement weist eine Stützfläche 19 auf, welche der Innenfläche des Walzenmantels 6 zugewandt ist, und trägt eine ringförmige Tasche 20, die den Innenraum 11 praktisch vollständig umschließt. Sie ist lediglich durch schmale Querstege 21 in Taschenabschnitte unterteilt. Jeder Taschenabschnitt ist über eine Leitung 22, die mit einer Drossel 23 versehen ist, mit dem Druckraum 14 verbunden. Die Taschenfläche At ist etwas größer als die Druckfläche Ak. Zu diesem Zweck besitzt das Ringelement im Taschenbereich eine Erweiterung 24. Der Innenraum 11, der eine Querschnittsfläche Ai hat, ist über eine Ablaufleitung 25 mit einem ersten Drosselorgan 26, hier in der Form eines einstellbaren Druckhalteventils, verbunden.

Außerdem ist der Zwischenraum 27 zwischen Walzenmantel 6 und Träger 9 über eine weitere Ablaufleitung 28 mit einem zweiten Drosselorgan 29 in der Form eines einstellbaren Druckhalteventils verbunden.

In Fig. 2 ist lediglich dargestellt, wie ein Stützelement 10 an die Druckregelventilanordnung 18 bzw. das erste Drosselorgan 26 angeschlossen ist. Für die übrigen Stützelemente können je eigene Ventile und Drosselorgane vorgesehen sein. Diese Stützelemente 10 können auch zonenweise zusammengefaßt werden. Vorstehend sind hauptsächlich die Extremstellungen der beiden Drosselorgane 26 und 29 betrachtet worden. In Zwischenstellungen, also mit teilweiser Drosselung, ergeben sich Zwischendrücke Pi und Pu, die die Bedienungsperson entsprechend anwenden wird.

Dies ermöglicht die folgenden Betriebsweisen, wobei angenommen wird, daß in dem Druckraum 14 der Druck Pk, im Innenraum 11 der Innendruck Pi und im Ringraum 27 der Außendruck Pu herrscht.
1. Wenn beide Drosselorgane 26 und 29 geöffnet sind, ist Pu = 0, Pi = 0 und Pk > 0.
   In diesem Fall arbeitet das als Ringelement ausgebildete Stützelement 10 mit einer relativ kleinen resultierenden Druckfläche At. Da die Fläche Ai wegen des abfließenden Öls drucklos ist, ergibt sich der Vorteil, daß niedrige Streckenlasten im Walzenspalt 3 mit hydraulischen Drücken gefahren werden können, die nicht unzulässig klein sind, sondern im beherrschbaren Bereich liegen.
2. Wenn das erste Drosselorgan 26 ganz oder teilweise geschlossen, das zweite Drosselorgan 29 dagegen geöffnet ist, ergibt sich Pu = 0, 0 < Pi < Pt und Pk > 0.
   Weil das über den Innenraum 11 rückfließende Öl durch das Drosselorgan 26 gedrosselt wird, baut sich im Innenraum ein Druck Pi auf. Dieser wirkt mit der Fläche Ai zusätzlich als Kraft auf den Walzenmantel 6. Bei vollständiger Abdrosselung des rückfließenden Druckmittels aus dem Innenraum 11 stellt sich ein Druck Pi gleich dem Taschendruck Pt ein. In diesem Fall ist in Abhängigkeit vom Druck Pk die maximale Tragfähigkeit des Ringelements erreicht. Durch die relativ große Gesamtfläche können auch höchste Streckenlasten mit technisch üblichen Öldrücken gefahren werden.
3. Wenn das zweite Drosselorgan 29 geschlossen, das erste Drosselorgan 26 dagegen geöffnet ist, ergibt sich Pu > 0, Pu < Pt < Pk und Pi = 0.
   Da das über den Ringraum 27 rückfließende Druckmittel aller Stützelemente abgedrosselt wird, stellt sich im Ringraum ein Druck Pu > 0 ein. Dieser wirkt auf die gesamte Innenfläche des Walzenmantels 6 mit Ausnahme des Bereichs der ringförmigen Stützelemente 10. Da hier das über den Innenraum abfließende Druckmittel nicht abgedrosselt wird, wirkt das Ringelement im Sinne einer negativen Kraft auf den Walzenmantel 6, weil auf der gegenüberliegenden Seite eine Kraft resultiert, die gleich dem Produkt aus dem Druck Pu und der Innenfläche Ai ist. Somit kann mit dem Ringelement eine vom Walzenspalt 3 weggerichtete Kraft auf den Walzenmantel 6 aufgebracht werden. Beim Einsatz der Ringelemente kann daher auf Gegenstützquellen, welche vom Spalt weggerichtet angebracht sind, sei es um eine gewünschte Biegung zu erreichen, sei es zum Wegbewegen des Walzenmantels vom Spalt 3, verzichtet werden.

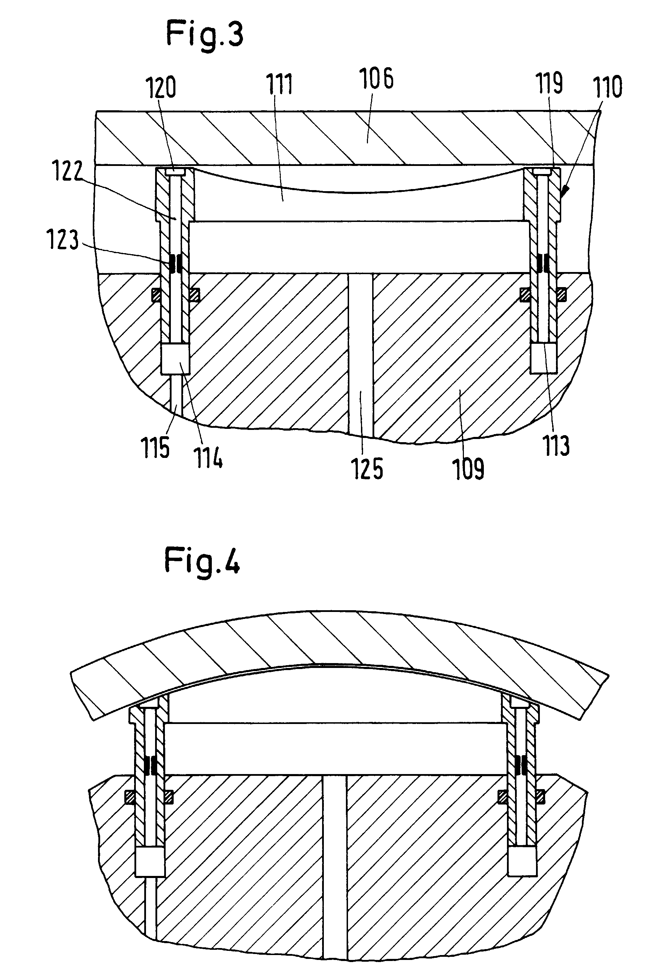

Die Fig. 3 bis 5, bei denen für entsprechende Teile um 100 erhöhte Bezugszeichen verwendet sind, zeigen eine praxisnahe Ausführung mit besonders schmaler Stützfläche 119, die das Arbeiten mit sehr geringen Streckenlasten erlaubt. Das Stützelement 110 hat einen kreisringförmigen Querschnitt. Die ringförmige Tasche 120 ist durch schmale Querstege 121 in Taschenabschnitte 120' unterteilt, die je über eine als Bohrung ausgeführte Leitung 122 mit dem Druckraum 114 verbunden sind. Hierdurch wird das Ringelement gegen Kippneigung stabilisiert, welche durch Reibungskräfte hervorgerufen werden kann, die durch die Rotation des Walzenmantels 6 auf das Ringelement wirken.

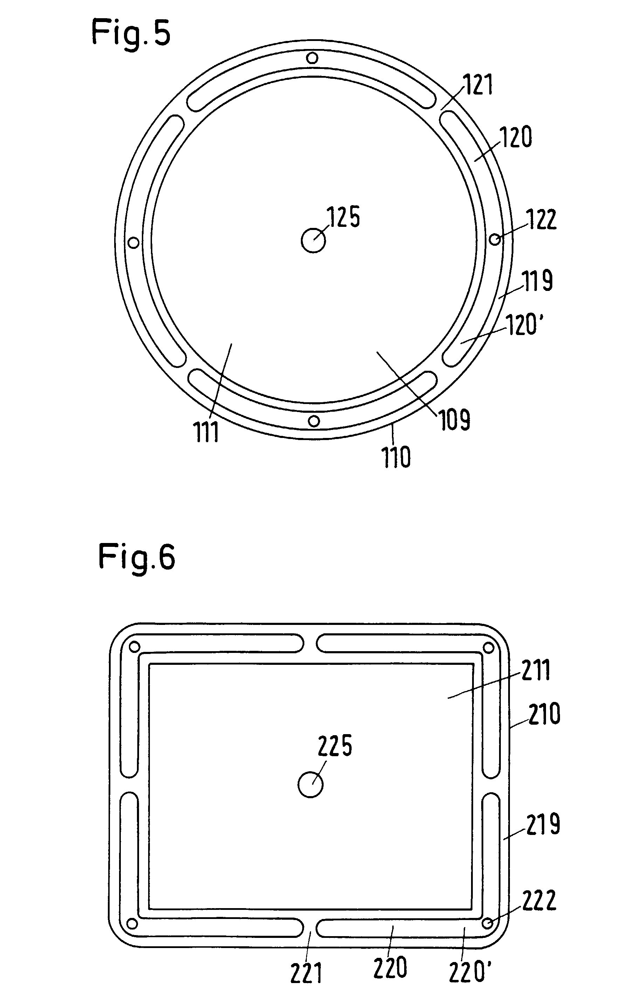

Aus Fig. 6, bei der für entsprechende Teile um 200 erhöhte Bezugszeichen verwendet werden, ergibt sich schließlich, daß das Stützelement 220 auch einen Querschnitt besitzen kann, der nicht kreisringförmig, sondern rechteckig ist. Demzufolge ergibt sich eine Stützfläche 219 mit Rechteckform. Die Taschen 220 sind durch Querstege 221 in Taschenabschnitte 220' unterteilt, die wiederum über eine Leitung 222 über eine Drossel mit dem Druckraum in Verbindung stehen.

## Patentansprüche

1. Durchbiegungssteuerbare Walze für einen Kalander o.dgl., bei der ein Walzenmantel (6) mit Hilfe von hydrostatischen Stützelementen (10,110,210) an einem den Walzenmantel (6) durchsetzenden, drehfest gelagerten Träger (9) abgestützt ist und die Stützelemente (10,110,210) in ihrer der Mantelinnenfläche zugewandten Stützfläche (19,119,219) mindestens eine Tasche (20,120,220) aufweisen und mit einer dem Träger (9) zugewandten Druckfläche (13,113) einen Druckraum (14,114) begrenzen, der einerseits mit einer Druckmittelzuleitung (15,115) und andererseits über eine Drossel (23,123) mit der Tasche (20,120,220) in Verbindung steht, dadurch gekennzeichnet, daß die Stützelemente (10; 110; 210) als Ringelemente mit ringförmiger Tasche (20; 120; 220) und ringförmiger Druckfläche (13; 113) ausgebildet sind und daß der vom Ringelement umschlossene Innenraum (11; 111; 211) mit einer ein einstellbares Drosselorgan (26) aufweisenden Ablaufleitung (25; 125; 225) in Verbindung steht.

2. Walze nach Anspruch 1, dadurch gekennzeichnet, daß der zwischen Walzenmantel (6) und Träger (9) verbleibende Ringraum (27) mit einer ein zweites einstellbares Drosselorgan (29) aufweisenden Ablaufleitung (28) in Verbindung steht.

3. Walze nach Anspruch 1 oder 2, dadurch gekennzeichnet, daß die Stützelemente (10, 110) im Querschnitt kreisringförmig sind.

4. Walze nach einem der Ansprüche 1 bis 3, dadurch gekennzeichnet, daß die ringförmige Tasche (20; 120; 220) durch Querstege (21; 121; 221) unterteilt und jeder Taschenabschnitt (120'; 220') mit dem Druckraum (14; 114) über eine Drossel (23) verbunden ist.

5. Walze nach einem der Ansprüche 1 bis 4, dadurch gekennzeichnet, daß die ringförmige Tasche (20; 120) und die ringförmige Druckfläche (13; 113) annähernd deckungsgleich radial hintereinander liegen.

6. Walze nach Anspruch 5, dadurch gekennzeichnet, daß die Taschenfläche (At) geringfügig größer ist als die Druckfläche (Ak).

7. Walze nach einem der Ansprüche 1 bis 6, dadurch gekennzeichnet, daß das einstellbare Drosselorgan (26, 29) ein Ventil ist.

8. Walze nach Anspruch 7, dadurch gekennzeichnet, daß das einstellbare Ventil ein Druckhalteventil ist.

## Claims

1. Controllered-flexibility roller for a calender or the like and on which one roller sleeve (6) is supported with the aid of hydrostatic support members (10; 110;210) on a carrier (9) going through the roller sleeve (6) and mounted to rotate with it, and the support members (10; 110; 210), on their support surface turned towards the inner surface of the sleeve, have at least one pocket (20; 120; 220) and define a pressure space with a pressure surface (13, 113) turned towards the carrier (9), the space being connected on the one hand to a pressure medium supply line (15; 115) and on the other hand to the pocket (20, 12, 220) via a choke (23; 123), **characterised in that** the support members (10; 110; 210) are configured as ring members with an annular pocket (20; 120; 220) and annular pressure surface (13; 113), and in that the inner space (11; 111; 211) surrounded by the ring member communicates with a discharge pipe (25; 125; 225) which has an adjustable choke member (26).

2. Roller according to claim 1, **characterised in that** the annular space (27) remaining between roller sleeve (6) and carrier (9) communicates with a discharge pipe (28) which has a second adjustable choke member (29).

3. Roller according to claim 1 or 2, **characterised in that** the supporting members (10, 110) are circular in cross-section.

4. Roller according to one of claims 1 to 3, **characterised in that** the annular pocket (20; 120; 220) is divided by transverse webs (21; 121; 221) and each pocket section (120'; 220') is connected with the pressure space (14; 114) via a choke (23).

5. Roller according to one of claims 1 to 4, **characterised in that** the annular pocket (20; 120) and the annular pressure surface (13; 113) lie approximately congruent radially behind one another.

6. Roller according to claim 5, **characterised in that** the pocket surface (At) is slightly larger than the pressure surface (Ak).

7. Roller according to one of claims 1 to 6, **characterised in that** the adjustable choke member (26, 29) is a valve.

8. Roller according to claim 7, **characterised in that** the adjustable valve is a pressure maintaining valve.

## Revendications

1. Rouleau à réglage de la flexion pour une calandre ou analogue, selon lequel une enveloppe de rouleau (6) est appuyée à l'aide d'éléments d'appui hydrostatiques (10 ; 110 ; 210) sur un support (9) traversant l'enveloppe de rouleau (6) et monté fixe en rotation et selon lequel les éléments d'appui (10 ; 110 ; 210) comportent au moins une poche (20 ; 120 ; 220) dans leur surface d'appui (19 ; 119 ; 219) proche de la surface intérieure de l'enveloppe et délimitent avec une surface de pression (13 ; 113) proche du support (9) un espace de pression (14 ; 114) qui est en liaison d'une part avec une conduite d'amenée de fluide de pression (15 ; 115) et d'autre part avec la poche (20 ; 120 ; 220) par l'intermédiaire d'un étranglement (23 ; 123), caractérisé en ce que les éléments d'appui (10 ; 110 ; 210) sont construits comme des éléments annulaires comportant des poches annulaires (20 ; 120 ; 220) et des surfaces de pression annulaires (13 ; 113) et par le fait que l'espace intérieur (11 ; 111 ; 211) entouré par l'élément annulaire est relié à une conduite d'évacuation (25 ; 125 ; 225) comportant un organe d'étranglement (26) réglable.

2. Rouleau selon la revendication 1, caractérisé en ce que l'espace annulaire (27) restant entre l'enveloppe de rouleau (6) et le support (9) est relié à une conduite d'évacuation (28) comportant un second organe d'étranglement (29) réglable.

3. Rouleau selon la revendication 1 ou 2, caractérisé en ce que les éléments d'appui (10 ; 110) ont une section en forme d'anneau de cercle.

4. Rouleau selon l'une des revendications 1 à 3, caractérisé en ce que la poche annulaire (20 ; 120 ; 220) est divisée par des traverses (21 ; 121 ; 221) et chaque segment de poche (120' ; 220') est relié à l'espace de pression (14 ; 114) par l'intermédiaire d'un étranglement (23).

5. Rouleau selon l'une des revendications 1 à 4, caractérisé en ce que la poche annulaire (20 ; 120) et la surface de pression (13 ; 113) annulaire se trouvent radialement l'une derrière l'autre de manière à coïncider sensiblement.

6. Rouleau selon la revendication 5, caractérisé en ce que la surface de poche (At) est un peu plus grande que la surface de pression (Ak).

7. Rouleau selon l'une des revendications 1 à 6, caractérisé en ce que l'organe d'étranglement réglable (26 ; 29) est une soupape.

8. Rouleau selon la revendication 7, caractérisé en ce que la soupape réglable est une soupape de maintien de la pression.
